# EUROPÄISCHE PATENTSCHRIFT

(11) **EP 1 922 483 B1**
(45) Veröffentlichungstag und Bekanntmachung des Hinweises auf die Patenterteilung: **18.11.2009**
(21) Anmeldenummer: 06778166.6
(22) Anmeldetag: 03.08.2006
(51) Int. Cl.: F04B 1/04, F04B 49/12, F04B 9/04, F04B 27/053

(54) **PUMPEN-ODER KOMPRESSORAGGREGAT**
PUMP OR COMPRESSOR UNIT
ENSEMBLE POMPE OU COMPRESSEUR

(30) Priorität: 26.08.2005 DE 102005040669; 24.03.2006 DE 102006014160; 15.05.2006 DE 102006022528
(43) Veröffentlichungstag der Anmeldung: 21.05.2008
(73) Patentinhaber: Continental Teves AG & CO. OHG, 60488 Frankfurt (DE)
(72) Erfinder: RODRIGUES, Augusto, 13218-080 Jundiai SP (BR); DINKEL, Dieter, 65824 Schwalbach (DE); BRIESEWITZ, Rüdiger, 63486 Bruchköbel (DE); HINZ, Axel, 61267 Neu-Anspach (DE); VOGEL, Günther, 63303 Dreieich (DE); GREIFF, Uwe, 61352 Bad Homburg (DE); LENZ, Renè, 60599 Frankfurt/M (DE); KÖHLER, Christoph, 65779 Kelkheim (DE)
(86) Internationale Anmeldenummer: PCT/EP2006/065037
(87) Internationale Veröffentlichungsnummer: WO 2007/023075

(56) Entgegenhaltungen:
- EP-A- 0 539 849
- WO-A-98/10191
- WO-A-02/097271
- DE-A1- 1 907 349
- DE-A1- 4 122 486
- DE-A1- 19 650 274
- US-A- 2 592 237
- US-A1- 2002 038 554
- US-B1- 6 190 137

## Beschreibung

Die Erfindung betrifft ein Pumpen- oder Kompressoraggregat vom Verdrängertyp zur Verwendung für eine schlupfgeregelte Bremsanlage.

Konventionelle Aggregate enthalten ein Getriebe mit konstanter Übersetzung. Beispielsweise bei blockiergeschützten Bremsaggregaten hat dies zur Folge, dass die Motorbelastung im ABS-Rückförderbetrieb bei hoher Wellenleistung, unter relativ hohen fahrerinitierten Bremsdrücken bis etwa 200 bar, stark ansteigt. Ein anderer Anwendungsfall betrifft jedoch ESP-Regelzyklen, welche grundsätzlich nur ein mittleres Druckniveau bis etwa 100 bar aber einen hohen Förderstrom erfordern. Speziell bei konventionellen Aggregaten, deren Leistungsdaten primär für hohe Förderströme ausgelegt sind, weil diese beispielsweise große Kolbendurchmesser sowie eine relativ große Getriebeübersetzung aufweisen, ist es theoretisch denkbar, dass der Elektromotor im (ABS-) Hochdruckbereich nicht mehr das erforderliche Drehmoment aufbringt. Blockierströme führen jedoch zu einer unzulässig hohen elektrischen Belastung von einem elektrischen Fahrzeugbordnetz. Bei der Konstruktion einer schlupfgeregelten Bremsanlage besteht bisher die schwierige Aufgabe, einen Abstimmungskompromiss zwischen ABS- und ESP-Optimierung aufzusuchen.

Aus der WO 93/01073 A1 ist ein Getriebe mit einer Exzentervorrichtung zur Variation des Fördervolumens bekannt. Dabei ist ein exzentrischer Wellenzapfen drehfest sowie axial verschiebbar in einem Steuerschieber aufgenommen, welcher seinerseits drehbar sowie axial verschiebbar in einem Gehäuse gelagert ist. Auf dem Wellenzapfen, sowie seitlich neben dem Steuerschieber, befindet sich ein Exzenterring, der relativ zu dem Wellenzapfen verdrehbar, und auch innerhalb gewisser Grenzen relativ zu dem Steuerschieber verdrehbar angeordnet ist. Zwischen Steuerschieber und Exzenterring ist ein elastisches Mittel eingespannt. Dabei wird durch eine axiale Verschiebung von dem Steuerschieber, relativ zum Gehäuse, eine relative Verdrehung des Exzenterrings in Relation zu dem Wellenzapfen ermöglicht. Indem der jeweilige hydraulische Druck also auf den Steuerschieber einwirkt, und bei Bedarf eine Verstellbewegung initiieren kann, wird eine automatische Anpassung von dem Fördervolumen ermöglicht.

Die vorstehend beschriebene Anordnung erfordert eine große Teileanzahl und verursacht unter anderem deshalb einen hohen konstruktiven und logistischen Aufwand. Prinzipiell gleiches gilt für eine Vorrichtung, welche aus der DE 20 2004 005 443 U1 bekannt geworden ist, und ebenfalls eine automatische Fördermengenvariation ermöglichen soll. Weil der Aufwand zur Integration von derartigen Sondergetriebebauformen unangemessen steigt, und auch eine Anpassung von dem Gehäuse erfordert, sind die Chancen für eine industrielle Nutzung gering.

Jedenfalls beruhen die vorbekannten Vorrichtungen nach bisheriger Kenntnis auf nicht industriell genutzten Konzepten, was auch mit deren erhöhtem Aufwand korreliert.

Daher besteht eine weitere Aufgabe der Erfindung darin, eine bauraumneutrale Lösung vorzuschlagen, die einfach im Sinne von einem Baukasten, also ohne hochgradige Änderungen oder Montageprobleme, an Stelle einer Lagerschale nach der DE 196 36 508 A1 in Gehäuse integrierbar ist.

Aus US 2002/0038554 A1, aus der die Merkmale des Oberbegriffs von Patentanspruch 1 hervorgehen, ist bereits ein Kompressoraggregat der gattungsbildenden Art bekannt, welches einen Elektromotor, eine Antriebswelle, ein Getriebe und zwei relativ zueinander verdrehbare, ineinander integrierte radial innere und radial äußere Exzentersegmente aufweist, deren Exzentersummenmaß zur Beeinflussung eines über die Antriebswelle betätigbaren Kolbens in einem Zylinder veränderbar ist, wobei das radial innere Exzentersegment einstückig mit der Antriebswelle verbunden ist. Die Veränderung des Exzentersummenmaßes erfolgt durch Drehrichtungsumkehr mittels des auf die Antriebswelle wirksamen Elektromotors.

Ferner geht aus US 6,190,137 B1 ein Kompressoraggregat hervor, mit einer von einem Elektromotor angetriebenen Kurbelwelle, die in beiden Drehrichtungen wenigstens einen Kolben in einem Zylinder translatorisch bewegt. Die Kurbelwelle weist einen exzentrisch ausgerichteten Bereich und einem Verriegelungsmechanismus auf, der gelenkig mit der Kurbelwelle verbunden ist. Auf dem exzentrisch ausgerichteten Bereich der Kurbelwelle ist ein Nocken in beiden Drehrichtungen verdrehbar gelagert, um abhängig von der Nockenposition zwei unterschiedlich große Kolbenhübe einstellen zu können, wobei in einer der beiden Nockenpositionen der Verriegelungsmechanismus wirksam ist.

Es ist die Aufgabe der vorliegenden Erfindung, ein Pumpen-oder Kompressoraggregat der angegebenen Art mit möglichst geringem baulichen Aufwand herzustellen, dass für den Einsatz in einem schlupfgeregelten Kraftfahrzeug-Bremssystem geeignet ist und das über eine möglichst einfache, wartungsarme und damit funktionssichere Lagerung des äußeren Exzenters verfügt.

Diese Aufgabe wird für ein Pumpen- oder Kompressoraggregat der im Oberbegriff angegebenen Art durch die kennzeichnenden Merkmale des Patentanspruchs 1 gelöst.

Gemäß einem ersten Ausführungsbeispiel des erfindungsgemäßen Pumpen- oder Kompressoraggregats sind relativ zueinander verdrehbare Exzentersegmente, zwischen denen ein elastisches Element eingespannt ist, ineinander integriert vorgesehen, also nicht nebeneinander angeordnet, indem ein radial äußeres Exzentersegment ein radial inneres Exzentersegment ringförmig umgreift. Im Ergebnis wird eine übersichtliche und folglich kostengünstige Konstruktion erhalten, welche einfach im Sinne von einem Baukasten - im Austausch gegen ein konventionelles Getriebe - in einem Gehäuse angeordnet ist. Das Getriebe kann als Teil des Motors angesehen werden. Zumindest ist es nicht am Gehäuse befestigt, sondern wird zusammen mit dem Elektromotor oder kurz vor dem Anbau des Elektromotors als kompakte, gesondertes Modul, in das Gehäuse eingeführt. Weiterhin wird eine wesentlich vereinfachte und kostengünstigere Motorenauswahl ermöglicht, indem der konstruktiv vorgegebene, quasi-lineare Zusammenhang zwischen Motordrehmoment und Motordrehzahl mit Hilfe von einem stufenlosen Getriebemechanismus aufgehoben wird. Denn das Exzentersummenmaß e_{Σ} auf der Abtriebsseite wird in Abhängigkeit von dem Bremsmoment, welches proportional zu Querkräften F_{K} ist, variabel eingestellt. Im Ergebnis wird ein besonders kostengünstiges Aggregat unter Verwendung von einem kostengünstigen Elektromotor ermöglicht. Indem die in dem elastischen Mittel gespeicherte Energie bei anderen Motordrehwinkeln zur Verfügung gestellt werden kann, erfolgt weiterhin zweitweise eine Energiespeicherung und eine Energierückführung in das Getriebesystem.

In vorteilhafter Ausgestaltung der Erfindung ist das radial äußere Exzentersegment unter Zwischenordnung von Lagermitteln - insbesondere unter Zwischenordnung einer Gleitlagerung - auf dem radial inneren Exzentersegment abgestützt. Diese Maßnahme ermöglicht eine beanspruchungsgerechte Konstruktion, wobei eine Verkürzung der Wellenlänge nicht nur zur Miniaturisierung sondern auch dazu beiträgt, Biegemomente zu reduzieren. Dies gilt insbesondere für Ausführungsformen, bei der die Antriebswelle auf zwei Lagern gelagert ist, und einen frei auskragenden Abschnitt aufweist, welcher mit dem Getriebe und insbesondere mit den Exzentersegmenten versehen ist. Denn für derartige Konstruktionen ist eine Minimierung der wirksamen Biegemomente essentiell.

Zur Verringerung der Reibungsarbeit kann es sinnvoll sein, dass das radial äußere Exzentersegment unter Zwischenordnung von Wälzlagermitteln auf dem radial inneren Exzentersegment abgestützt ist. Grundsätzlich sind jedoch auch robuste Lösungen unter Verwendung von Gleitlagerungen empfehlenswert, wenn Reibungsarbeit nicht besonders dominiert.

Bevorzugt ist das radial äußere Exzentersegment als multifunktionaler Lagerring ausgebildet, welcher eine radial äußere Wälzkörperlauffläche zur koaxial-drehbaren Abstützung von einem Lageraußenring aufweist, sowie eine radial innere Lauffläche zwecks Abstützung auf dem radial inneren Exzentersegement aufweist.

Zur Begrenzung der relativen Verdrehbarkeit ist jedes der Exzentersegmente mit einem Anschlagmittel versehen, welches den relativen Verdrehwinkel zwischen den Exzentersegmenten begrenzt. Jedes der Exzentersegmente, oder wenigstens ein mit diesem drehfest verbundenes Bauteil, verfügt über eine Aufnahme zur Übertragung der Kräfte des elastischen Mittels. Die Aufnahme ist so ausgebildet, dass das elastische Mittel dazu dienen kann, die Exzentersegmente nach Wegfall der hydraulischen Beanspruchung wieder in eine Ruhelage zu verschwenken, innerhalb derer maximale Summenexzentrizität vorliegt. Umgekehrt verfügt das Getriebe über die kleinste wirksame Summenexzentrizität, wenn die Exzentersegmente infolge hoher Torsionskräfte maximal entgegen der Wirkung des elastischen Mittels gegeneinander verdreht sind. Dadurch ist das elastische Mittel auch dafür geeignet und bestimmt, die Exzentersegmente bei Rückgang oder Wegfall der Last in eine Position zurück zu stellen, in der eine größere Summenexzentrizität vorliegt.

Wenn die Exzentersegmente radial innerhalb von dem Lageraußenring angeordnet sind, führt dies zu einer weiter verdichteten Bauweise. Gleiches gilt für Ausführungen, bei denen das elastische Mittel in dem Lageraußenring angeordnet ist. Verdichtet Bauweise wird ebenfalls ermöglicht, wenn die Antriebswelle zur Aufnahme von einem oder mehreren Getriebebauelementen, wie insbesondere zur Aufnahme von dem elastischen Mittel, hohl ausgebildet ist.

Wenn der Lageraußenring topfförmig mit einem geschlossenen Boden ausgebildet ist, wird Schmierstoff besser vor Auswaschungen geschützt.

Gute Ergebnisse bei ausreichender Federsteifigkeit werden erzielt, wenn das elastische Mittel als Schraubenfeder ausgebildet ist. Zur Erhöhung der Federsteifigkeit, der Dauerfestigkeit und der Dämpfungseigenschaften können mit Vorteil Schraubenfedern in Mehrdrahttechnik vorgesehen sein, bei denen ein schraubenförmig gewundener Kerndraht mit einem oder mehreren, nebeneinander liegenden Drähten, innerhalb einer Lage, oder in mehreren, übereinander liegenden, gewundenen Drahtlagen versehen ist. Weitere Federvarianten erstrecken sich auf Torsionsfedern, Tellerfedern oder vergleichbare Elastoelemente wie Elastomere.

Eine besonders vorteilhafte Auswirkung der Erfindung besteht darin, dass auf Basis einer einzigen Motorkennlinie eine Variation einer Pumpen-Förderkennlinie ermöglicht wird. Dadurch sind maximal erforderliche elektrische Ströme des Elektromotors absenkbar, so dass auch Leiterquerschnitte, wie beispielsweise der Leiterquerschnitt einer elektrischen Verbindung zwischen dem Elektromotor und einem elektronischen Regler zur Elektromotor- und Bremsenregelung, reduziert werden kann. Als Folge kann der Durchmesser einer Durchgangsbohrung für die Leiterdurchführung reduziert werden, so dass in dem Gehäuse anders nutzbarer Bauraum geschaffen wird.

Weitere Einzelheiten der Erfindung gehen aus der Beschreibung und anhand der Zeichnung hervor. In der Zeichnung zeigt:
Fig. 1 Getriebebereich eines Pumpenaggregates im Schnitt sowie vergrößert,
Fig. 2 ein Lager aus Fig. 1, umfassend ein Exzentersegment, ein elastisches Mittel, Wälzkörper sowie einen topfartigen Lagerring im Schnitt sowie vergrößert,
Fig. 3 eine Ausführungsform wie in Fig. 1 mit einem mehrteiligen Lagerring,
Fig. 4 eine Getriebevariante mit einer Tellerfeder wobei das Getriebe zwischen Lagern eingespannt ist,
Fig. 5 Getriebebereich einer weiteren Ausführungsform mit Hohlwelle und Torsionsfeder in perspektivischem Schnitt sowie vergrößert,
Fig. 6 zwecks allgemeiner Erläuterung ein konventioneller Lagerring von einem bekannten Getriebe im Schnitt sowie vergrößert,

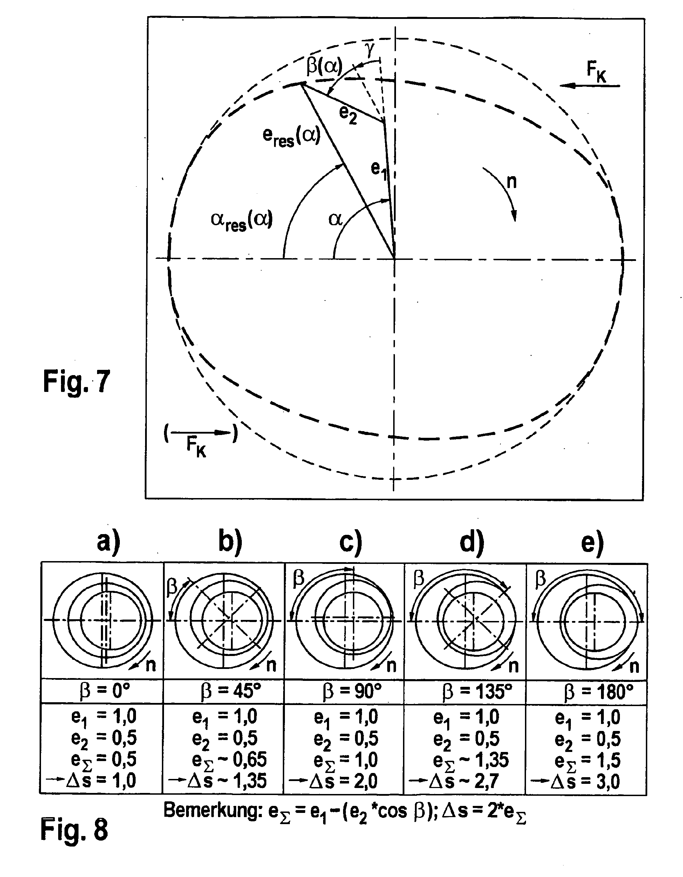

Fig. 7 eine Berechnungsskizze,
Fig. 8 a-e einige Prinzipskizzen zwecks Verdeutlichung des Exzentersummenmaß e_{Σ} bei unterschiedlicher Relativverdrehung der Exzentersegmente.

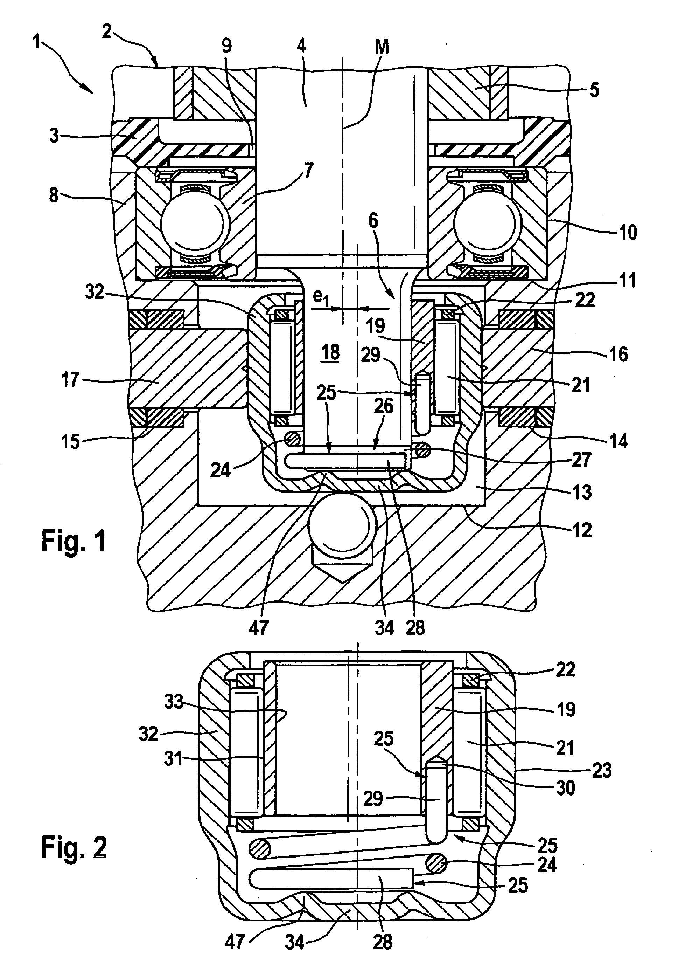

Die Figuren 1, 3, 4 zeigen jeweils ein Elektromotor-Pumpen-Aggragat 1, das über einen Elektromotor 2 verfügt, umfassend einen Stator mit einem topfförmigen Motorgehäuse, welches Permanentmagneten, eine vorzugsweise als Bürstenhalteplatte ausgebildeten Lagerschild 3 sowie einen Rotor aufnimmt. Der Rotor umfasst eine Antriebswelle 4, einen Kommutator 5 zur Beaufschlagung durch nicht gezeichnete Kohlebürsten, und ein, eine Rotationsbewegung in eine Translationsbewegung wandelndes, Getriebe 6 vom Exzentertyp mit einer drehfest an der Antriebswelle 4 angeordneten Exzentrizität. Diese kann einstückig mit der Antriebswelle 4, oder als gesondertes Bauteil vorgesehen sein.

Prinzipiell ist es möglich, einen Bürstenmotor vom Gleichstromtyp durch einen bürstenlosen, elektronisch kommutierten Elektromotor 2 zu ersetzen, ohne die Erfindung zu verlassen. Die Antriebswelle 4 ist innerhalb von zwei Lagern, von denen wenigstens ein Lager 7 im wesentlichen vollständig in einem Gehäuse 8 für eine Pumpe aufgenommen ist, drehbar platziert, und durchgreift einen Wellendurchgang 9 vom Lagerschild 3, wobei dieser, zwecks Ausbildung einer Spalt-oder Labyrinthdichtung, weitestgehend bis zum Umfang der rotierenden Antriebswelle 4 reicht.

Das Gehäuse 8 verfügt über eine abgestufte Sackbohrung 10, wobei eine Bohrungsstufe 11 zur Aufnahme von dem Lager 8 dient, und wobei eine weitere Bohrungsstufe 12 einen Kurbelraum 13 ausbildet, in den rechtwinklig zur Mittelachse M der Sackbohrung 10 gerichtete Aufnahmebohrungen 14,15 für Kolben 16,17 einmünden.

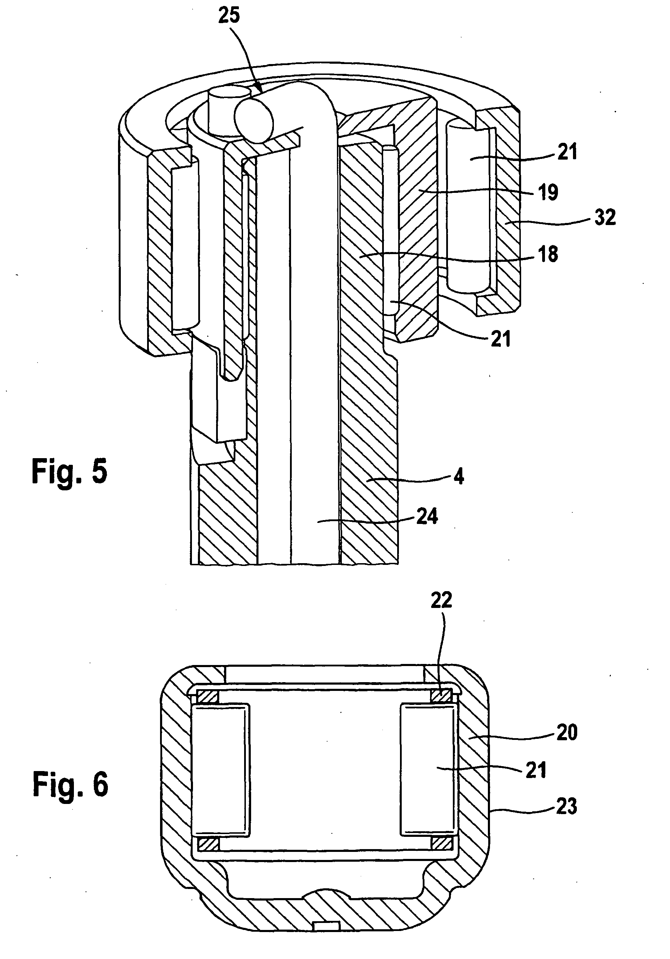

Bei grundsätzlich bekannten Motor-Pumpenaggregaten kommt ein Getriebe 6 unter Verwendung von einem Nadellager entsprechend Fig. 6 zum Einsatz. Der wellenseitige Exzenter wird dabei von dem Nadellager umfassend eine Nadelhülse 20 mit Nadeln 21 und mit einem Nadelkäfig 22 umgriffen, wobei die Kolben 16, 17 von radial außen auf einem zylindrischen Mantel 23 der Nadelhülse 20 abgestützt sind. Die Nadeln 21 laufen unmittelbar auf einer entsprechend feinbearbeiteten Lauffläche von dem wellenfesten Exzenter, welcher vorzugsweise einstückig mit der Antriebswelle 4 ausgebildet ist. Eine Weiterbildung mit einem, als separaten Exzenterring ausgebildeten, Innenring ist ebenfalls möglich.

Ausgehend von einem oben beschriebenen, grundsätzlich bekannten Aggregataufbau ist ein neuartiges Getriebe 6 gemäß Fig. 1 gekennzeichnet, indem es baukastenartig einfach durch Austausch des konventionellen Nadellager-Moduls wie folgt erhalten werden kann.

Ringförmig um das wellenfeste Exzentersegment 18 mit seiner Exzentrizität e₁ ist ein zweites, radial äußeres Exzentersegment 19 mit einer Exzentrizität e₂ vorgesehen, welches relativ zu dem wellenfesten Exzentersegment 18 verdrehbar angeordnet ist. Folglich sind die Exzentersegemente 18,19 in besonders raumsparender Art und Weise zwecks Reduktion der Baulänge ineinander integriert. Durch eine relative Verdrehung der Exzentersegmente 18,19 um einen Verdrehwinkel β zueinander, wird eine Veränderung von einem wirksamen Exzentersummenmaß e_{Σ} bewirkt. Mit anderen Worten ist die wirksame Exzentrizität e zur Verdrängung der Kolben 16,17 nicht einheitlich fest vorgegeben, sondern kann zwischen einem maximalen Exzentersummenmaß e_{Σmax} und einem minimalen Exzentersummenmaß e_{Σmin} beliebig variiert werden. Zwischen den Exzentersegmenten 18,19 ist ein elastisches Mittel 24 - nach Fig. 1 eine Schraubenfeder - vorgesehen. Die Schraubenfeder kann derart elastisch vorgespannt zwischen den Exzentersegmenten 18,19 vorgesehen sein, dass die Exzentersegmente 18,19 in einer Ruhelage prinzipiell ein maximales oder ein minimales Exzentersummenmaß e_{Σ} aufweisen.

Zur Abstützung von dem elastischen Mittel 24 ist dieses mit Anschlagmitteln, insbesondere mit einem oder mehreren Mitnehmern 25 versehen, welche formschlüssig in zugeordnete Aufnahmen, wie insbesondere Ausnehmungen 26 von der Antriebswelle 4 und von dem radial äußeren Exzentersegment 19 eingreifen. Wie die Zeichnung erkennen lässt, kann die Antriebswelle 4 eine Quernut 27 in einer Stirnfläche von einem Exzenterzapfen aufweisen, um einen Drahtbügel 28 des elastischen Mittels 24 aufzunehmen. Das andere Ende vom elastischen Mittel 24 weist mit Vorteil einen abgekröpften Schenkel 29 auf, welcher in eine Sackbohrung 30 vom radial äußeren Exzentersegment 19 eingeführt ist. Die Anschlagmittel können den maximalen Verdrehwinkel β begrenzen, indem diese sowohl bei maximalem Exzentersummenmaß e_{Σmax}, wie auch bei minimalem Exzentersummenmaß e_{Σmin} zur Anlage gelangen. Schließlich kann jedes der Exzentersegmente 18,19 mit einem oder mehreren Anschlagmitteln zur gegenseitigen Anlage versehen sein.

Wie aus der Fig. 1 und 2 hervorgeht, ist das radial äußere Exzentersegment 19 für eine besonders robuste Ausgestaltung unter Zwischenordnung von Lagermitteln, insbesondere unter Zwischenordnung einer Gleitlagerung, auf dem radial inneren Exzentersegment 18 abgestützt. Wenn eine besonders reibungsarme Ausführung gewünscht ist, kann stattdessen eine Zwischenordnung von Wälzlagermitteln vorgesehen sein. Im Sinne einer modular austauschbaren Exzenterlagereinheit ist das radial äußere Exzentersegment 19 jedenfalls als multifunktionaler Lagerring ausgebildet, der eine radial äußere Wälzkörperlauffläche 31 zur koaxial-drehbaren Abstützung von einem Lageraußenring 32 aufweist, sowie mit einer radial inneren Lauffläche 33 zwecks Abstützung auf dem radial inneren Exzentersegement 18. Alle Getriebebauelemente, d. h. insbesondere die Exzentersegmente 18,19, das elastische Mittel 24, und auch die entsprechenden Lagermittel befinden sich für optimales Packaging im Inneren von dem Lageraußenring 32. Folglich nimmt das Getriebe 6 wenig Einbauraum in Anspruch, und kann einfach als eigenständiges Modul in konventionelle Gehäuse 8 integriert werden.

Indem der Lageraußenring 32 topfförmig mit einem geschlossenen Boden 34 ausgebildet ist, kann gewährleistet werden, dass möglichst wenig Schmierstoff durch Leckageflüssigkeiten ausgewaschen wird. Diese Gestaltung eignet sich daher für besonders dauerfeste Ausführungsformen.

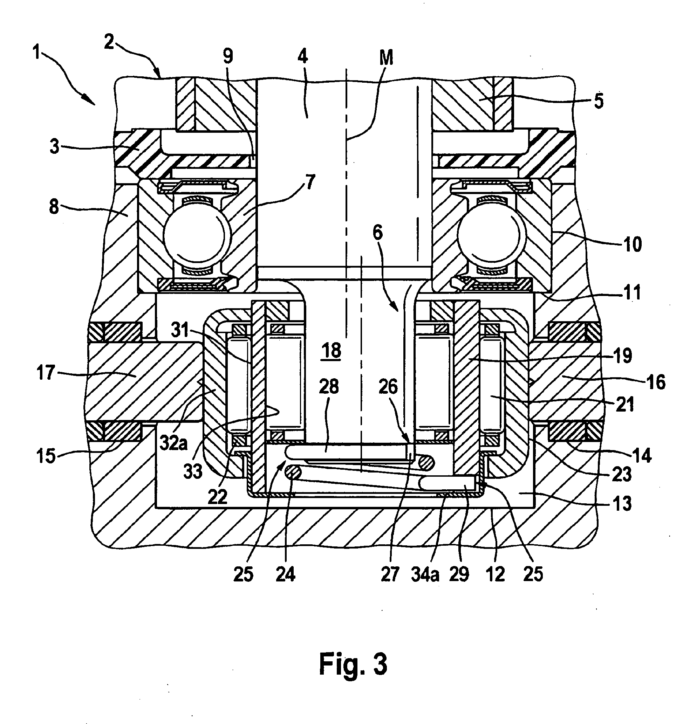

Eine Variante nach Fig. 3 ist mit der Besonderheit verknüpft, dass der Lageraußenring 32a nicht als einstückiges Blechpressteil ausgebildet ist, sondern als gebauter Lagerring mit einem gesonderten, weitgehend zylindrischen Mantel und mit einem gesonderten Boden 34a, welcher in eine Ausnehmung eingesetzt ist. Derartige Varianten eignen sich primär zu Erprobungszwecken, weil der Aufwand für die Herstellung der Getriebebauteile begrenzt ist.

Prinzipiell ist das elastische Mittel 24 ein hochbeanspruchtes Maschinenelement. Wenn dieses als Schraubenfeder auszubilden ist, empfiehlt sich eine dauerfeste Gestaltung, indem diese in Mehrdrahttechnik konstruiert ist, wobei ein schraubenförmig gewundener Kerndraht mit einem oder mehreren, nebeneinander liegenden Drähten, innerhalb einer Lage, oder in mehreren, übereinander liegenden, gewundenen Drahtlagen versehen ist. Dabei wird durch die redundant vorgesehenen Federdrähte nicht nur die Dauerfestigkeit erhöht, sondern es wird auch eine vorteilhafte Dämpfungswirkung gegenüber Schwingungsneigung erzielt. Folglich kann auch die Laufruhe erhöht werden. Weiter Varianten zur Befederung sind in Torsionsfedern, Tellerfedern oder Elastoelementen zu erblicken.

Eine noch weiter verdichtete Konstruktion - in Hinblick auf deren Baugröße - beruht auf dem Gedanken, die Antriebswelle 4 zur Aufnahme von einem oder mehreren Getriebebauelementen, wie insbesondere zur Aufnahme von dem elastischen Mittel 24, hohl auszubilden, wie dies ergänzend in Fig. 5 verdeutlicht ist. Dies ist insbesondere sinnvoll, wenn das elastische Mittel 24 als stabförmige Torsionsfeder ausgebildet ist, welche die Antriebswelle 4 weitgehend durchgreift.

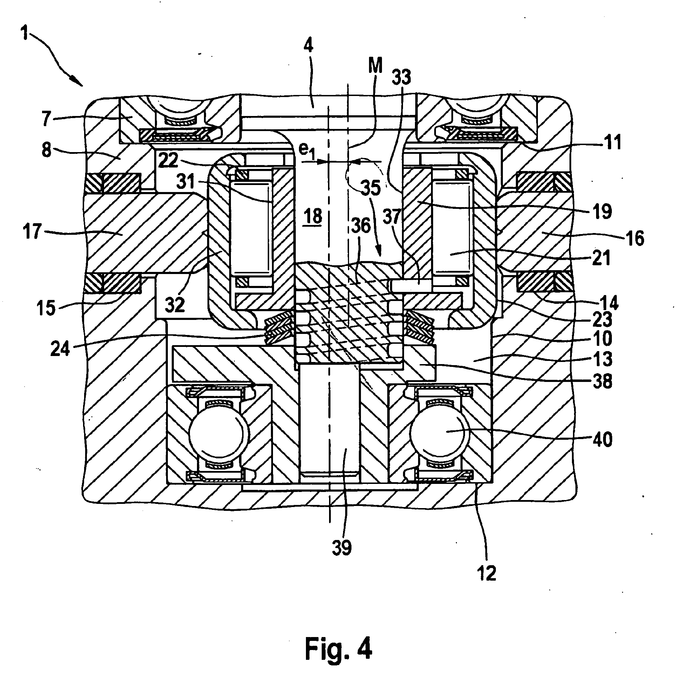

Eine andere, kompakte Lösung des Problems mit hervorragender Laufruhe, geht aus Fig. 4 hervor. Dabei ist das elastische Mittel 24 nicht unmittelbar zwischen den Exzentersegmenten 18,19 wirksam. Vielmehr sind die Exzentersegmente 18,19 ineinander integriert angeordnet, indem ein radial äußeres Exzentersegment 19 ein radial inneres Exzentersegment 18 ringförmig umgreift, sowie mit einem Wandler 35 zur Wandlung einer relativen Verdrehbewegung der Exzentersegemente 18,19 zueinander in eine axial-translatorische Verschiebungsbewegung eines der Exzentersegemente 18,19 in Relation zu dem jeweils anderen Exzentersegement 18,19. Durch diese Maßnahme können Mitnehmer für das elastische Mittel 24 entfallen.

Mit Vorteil ist der Wandler 35 als Schraubengetriebe 6 ausgebildet, wobei das lose, radial äußere und nicht das wellenfeste, radial innere Exzentersegement 19 für die Axialverschiebung ausgewählt ist. Wie aus der Fig. 4 hervorgeht, weist das wellenfeste Exzentersegment 18 eine schraubenförmige Nut 36 auf. Das radial äußere Exzentersegment 19 weist einen Mitnehmer 37 auf, der formschlüssig in die Nut 36 eingreift. Daher werden Axialkräfte, die in das radial äußere Exzentersegment 19 fließen, in die Antriebswelle 4 eingeleitet. Die Nut 36 weist eine Steigung auf, welche bei natürlicher Antriebswellendrehrichtung n und bei entsprechenden Querkräften F_{K} bewirkt, dass das radial äußere Exzentersegment 19 bestrebt ist, gegen die Beaufschlagung von dem elastischen Mittel 24 zu wirken. Dieser Effekt verstärkt sich mit fortschreitenden Querkräften F_{K}.

Bei dieser Lösung ist ein Tellerfederpaket als elastisches Mittel 24 integriert, welches sich einerseits unmittelbar an dem Exzentersegment 19 und andererseits an einem wellenfesten Massenausgleichselement 38 abstützt. Das Massenausgleichselement 38 ist auf einen Wellenzapfen 39 aufgepresst, und weiterhin in einem Wälzlager 40 gelagert. Weil der Exzenter beidseits in Lagern 7,40 abgestützt ist, werden Wellendurchbiegungen weitgehend vermieden, und es ergibt sich ein ruhiger Lauf.

Das Getriebe 6 ist mit folgenden Vorteilen verknüpft:
- Schaffung eines einfachen Getriebes ohne Erhöhung des Bauraumes (Kurbelraum)
- wenig und einfache zusätzliche Teile (nur ein zusätzliches Exzentersegment 19 und ein Anschlagmittel) und minimale Änderung an bestehenden Lagerkonfigurationen
- erhöhte Leistungsabgabe (Fördermenge im ESP-Betrieb) gegenüber reduzierter Leistungsaufnahme (Stromaufnahme im ABS-Betrieb)
- eine einzige Motorkennlinie ermöglicht zwei unterschiedliche Pumpenkennlinien, entsprechend der jeweils geschalteten, effektiven Summenexzentrizität (e=1,5/0,5mm)

Die Erfindung eignet sich primär für schlupfgeregelte elektrohydraulische Bremssysteme für Kraftfahrzeuge, deren Gehäuse 8 mit hydraulischen Kanälen, mit elektrohydraulischen Ventilen, sowie mit einem elektronischen Regler zur Ansteuerung der elektrohydraulischen Ventile versehen ist, und wobei weiterhin ein oder mehrere Sensoren, beispielsweise Drucksensoren und/oder Raddrehsensoren, und der Elektromotor 2 sowie die elektrohydraulischen Ventile mit dem elektronischen Regler zwecks Schlupfregelung vernetzt sind, sowie bevorzugt miteinander kommunizieren.

Die Erfindung ermöglicht eine verbesserte Anpassung der Charakteristik von einem Elektromotor 2 zur Verwendung bei einem derartigen Motor-Pumpen-Aggregat, indem für niedrige Förderdrücke ein hohes Verdrängungsvolumen ermöglicht wird, während bei hohen Förderdrücken ein automatisch oder gesteuert verringertes Verdrängungsvolumen bereit gestellt wird, und wobei diese Zusammenhänge im Rahmen einer verbesserten Antiblockierregelung, einer verbesserten Fahrstabiliätsregelung oder einer Chassis-Regelung ausgenutzt werden. Wenn eine elektronische, mechanische oder sonstige Vernetzung zwischen dem Motor 2 oder dem Getriebe 6 einerseits und einem elektronischen Regler für die Bremsenregelung andererseits vorgesehen ist, wird es ermöglicht, gezielte Änderungen in dem Motor- oder Getriebebereich für die Verbesserung von Regelaufgaben auszunutzen, was mehr Freiheiten für die Bremsenregelung eröffnet.

### Bezugszeichenliste

- 1: Pumpen- oder Kompressoraggregat
- 2: Elektromotor
- 3: Lagerschild
- 4: Antriebswelle
- 5: Kommutator
- 6: Getriebe
- 7: Lager
- 8: Gehäuse
- 9: Wellendurchgang
- 10: Sackbohrung
- 11: Bohrungsstufe
- 12: Bohrungsstufe
- 13: Kurbelraum
- 14: Aufnahmebohrung
- 15: Aufnahmebohrung
- 16: Kolben
- 17: Kolben
- 18: Exzentersegment
- 19: Exzentersegment
- 20: Nadelhülse
- 21: Nadel
- 22: Nadelkäfig
- 23: Mantel
- 24: elastisches Mittel
- 25: Mitnehmer
- 26: Ausnehmung
- 27: Quernut
- 28: Drahtbügel
- 29: Schenkel
- 30: Sackbohrung
- 31: Wälzkörperlauffläche
- 32, 32a: Lageraußenring
- 33: Lauffläche
- 34, 34a: Boden
- 35: Wandler
- 36: Nut
- 37: Mitnehmer
- 38: Massenausgleichselement
- 39: Wellenzapfen
- 40: Wälzlager
- 41: Getriebe

- **M**: Mittelachse
- **e_{1,2}**: Exzentrizität
- **eᵣₑₛ**: resultierende Exzentrizität
- **e**_{Σ}: Exzentersummenmaß
- α: Kurbeldrehwinkel
- β,γ: Teilwinkel
- α**ᵣₑₛ**: resultierender Kurbeldrehwinkel
- β: relativer Verdrehwinkel
- **F_{K}**: Querkraft
- **n**: Antriebswellendrehrichtung

## Patentansprüche

1. Pumpen- oder Kompressoraggregat vom Verdrängertyp, umfassend einen Elektromotor (2) mit einer Antriebswelle (4), die drehbar gelagert ist, und in ein Gehäuse (8) eingreift, mit einem eine Rotationsbewegung in eine Translationsbewegung wandelnden Getriebe (6), umfassend wenigstens zwei relativ zueinander verdrehbare Exzentersegmente (18,19) zur Veränderung von einem wirksamen Exzentersummenmaß (e_{Σ}), sowie umfassend wenigstens ein elastisches Mittel (24), welches zwecks elastischer Vorspannung zwischen den Exzentersegmenten (18,19) eingespannt ist, wobei die Exzentersegmente (18,19) ineinander integriert angeordnet sind, indem ein radial äußeres Exzentersegment (19) ein radial inneres Exzentersegment (18) ringförmig umgreift und wobei das radial innere Exzentersegment (18) einstückig mit der Antriebswelle (4) vorgesehen ist, **dadurch gekennzeichnet, dass** das radial äußere Exzentersegment (19) eine Wälzkörperlauffläche (31) für einen Lageraußenring (32, 32a) aufweist, und dass das Gehäuse (8) einen elektronischen Regler für ein schlupfgeregeltes Kraftfahrzeug-Bremssystem enthält.

2. Pumpen- oder Kompressoraggregat vom Verdrängertyp nach Anspruch 1, **dadurch gekennzeichnet, dass** das radial äußere Exzentersegment (19) unter Zwischenordnung von Lagermitteln, insbesondere unter Zwischenordnung einer Gleitlagerung, auf dem radial inneren Exzentersegment (18) abgestützt ist.

3. Pumpen- oder Kompressoraggregat vom Verdrängertyp nach Anspruch 1, **dadurch gekennzeichnet, dass** das radial äußere Exzentersegment (19) unter Zwischenordnung von Wälzlagermitteln auf dem radial inneren Exzentersegment (18) abgestützt ist.

4. Pumpen- oder Kompressoraggregat vom Verdrängertyp nach Anspruch 1, **dadurch gekennzeichnet, dass** das radial äußere Exzentersegment (19) als multifunktionaler Lagerring ausgebildet ist und zwecks Abstützung auf dem radial inneren Exzentersegment (18) eine radial innere Wälzkörperlauffläche (33) aufweist.

5. Pumpen- oder Kompressoraggregat vom Verdrängertyp nach Anspruch 1, **dadurch gekennzeichnet, dass** jedes der Exzentersegmente (18,19) mit einem Anschlagmittel versehen ist, welches einen relativen Verdrehwinkel (β) zwischen den Exzentersegmenten (18,19) begrenzt.

6. Pumpen- oder Kompressoraggregat vom Verdrängertyp nach Anspruch 1, **dadurch gekennzeichnet, dass** jedes der Exzentersegmente (18,19), oder wenigstens ein mit diesem drehfest verbundenes Bauteil, eine Aufnahme zur Übertragung des Kräfte des elastischen Mittels (24) aufweist.

7. Pumpen- oder Kompressoraggregat vom Verdrängertyp nach Anspruch 1, **dadurch gekennzeichnet, dass** die Exzentersegmente (18,19) radial innerhalb von dem Lageraußenring (32,32a) angeordnet sind.

8. Pumpen- oder Kompressoraggregat vom Verdrängertyp nach Anspruch 1, **dadurch gekennzeichnet, dass** das elastische Mittel (24) in dem Lageraußenring (32,32a) angeordnet ist.

9. Pumpen- oder Kompressoraggregat vom Verdrängertyp nach Anspruch 1, **dadurch gekennzeichnet, dass** der Lageraußenring (32,32a) topfförmig mit einem geschlossenen Boden (34,34a) ausgebildet ist.

10. Pumpen- oder Kompressoraggregat vom Verdrängertyp nach Anspruch 1, **dadurch gekennzeichnet, dass** die Antriebswelle (4) zur Aufnahme von einem oder mehreren Getriebebauelementen, wie insbesondere zur Aufnahme von dem elastischen Mittel (24), hohl ausgebildet ist, und dass das elastische Mittel (24) die Antriebswelle (4) zumindest teilweise durchgreift.

11. Pumpen- oder Kompressoraggregat vom Verdrängertyp nach Anspruch 1, **dadurch gekennzeichnet, dass** das elastische Mittel (24) als Schraubenfeder ausgebildet ist.

12. Pumpen- oder Kompressoraggregat vom Verdrängertyp nach Anspruch 1, **dadurch gekennzeichnet, dass** das elastische Mittel (24) als Torsionsfeder ausgebildet ist.

## Claims

1. Pump or compressor assembly of the positive-displacement type, comprising an electric motor (2) with a driveshaft (4) which is mounted rotatably and engages into a housing (8), with a gear (6) converting a rotational movement into a translational movement and comprising at least two eccentric segments (18, 19), rotatable with respect to one another, for varying an effective eccentric sum amount (e_{Σ}), and also comprising at least one elastic means (24) which is tension-mounted between the eccentric segments (18, 19) for the purpose of the elastic prestressing, the eccentric segments (18, 19) being arranged, integrated one in the other, in that a radially outer eccentric segment (19) annularly surrounds a radially inner eccentric segment (18), and the radially inner eccentric segment (18) being provided in one piece with the driveshaft (4), **characterized in that** the radially outer eccentric segment (19) has a rolling-body raceway (31) for a bearing outer ring (32, 32a), and **in that** the housing (8) contains an electronic controller for an anti-skid motor vehicle brake system.

2. Pump or compressor assembly of the positive-displacement type according to Claim 1, **characterized in that** the radially outer eccentric segment (19) is supported on the radially inner eccentric segment (18), with bearing means being interposed, in particular with a plain-bearing mounting being interposed.

3. Pump or compressor assembly of the positive-displacement type according to Claim 1, **characterized in that** the radially outer eccentric segment (19) is supported on the radially inner eccentric segment (18), with rolling-bearing means being interposed.

4. Pump or compressor assembly of the positive-displacement type according to Claim 1, **characterized in that** the radially outer eccentric segment (19) is designed as a multi-functional bearing ring and, for the purpose of support on the radially inner eccentric segment (18), has a radially inner rolling-body raceway (33).

5. Pump or compressor assembly of the positive-displacement type according to Claim 1, **characterized in that** each of the eccentric segments (18, 19) is provided with a stop means which limits a relative angle of rotation (β) between the eccentric segments (18, 19).

6. Pump or compressor assembly of the positive-displacement type according to Claim 1, **characterized in that** each of the eccentric segments (18, 19) or at least one component connected fixedly in terms of rotation to this has a receptacle for transmitting the forces of the elastic means (24).

7. Pump or compressor assembly of the positive-displacement type according to Claim 1, **characterized in that** the eccentric segments (18, 19) are arranged radially within the bearing outer ring (32, 32a).

8. Pump or compressor assembly of the positive-displacement type according to Claim 1, **characterized in that** the elastic means (24) is arranged in the bearing outer ring (32, 32a).

9. Pump or compressor assembly of the positive-displacement type according to Claim 1, **characterized in that** the bearing outer ring (32, 32a) is of pot-shaped design with a closed bottom (34, 34a).

10. Pump or compressor assembly of the positive-displacement type according to Claim 1, **characterized in that** the driveshaft (4) is of hollow design for the reception of one or more gear components, such as, in particular, for the reception of the elastic means (24), and **in that** the elastic means (24) passes at least partially through the driveshaft (4).

11. Pump or compressor assembly of the positive-displacement type according to Claim 1, **characterized in that** the elastic means (24) is designed as a helical spring.

12. Pump or compressor assembly of the positive-displacement type according to Claim 1, **characterized in that** the elastic means (24) is designed as a torsion spring.

## Revendications

1. Ensemble de pompe ou compresseur du type à refoulement, comprenant un moteur électrique (2) avec un arbre d'entraînement (4), qui est monté à rotation et vient en prise dans un boîtier (8), avec un engrenage (6) convertissant un mouvement de rotation en un mouvement de translation, comprenant au moins deux segments d'excentrique (18, 19) pouvant tourner l'un par rapport à l'autre en vue de modifier une mesure de somme d'excentrique effective (e_{Σ}), et comprenant au moins un moyen élastique (24) qui est tendu pour assurer une précontrainte élastique entre les segments d'excentrique (18, 19), les segments d'excentrique (18, 19) étant disposés de manière intégrée l'un dans l'autre, en ce qu'un segment d'excentrique radialement extérieur (19) vient en prise de manière annulaire autour d'un segment d'excentrique radialement intérieur (18), le segment d'excentrique radialement intérieur (18) étant prévu d'une seule pièce avec l'arbre d'entraînement (4), **caractérisé en ce que** le segment d'excentrique radialement extérieur (19) présente une surface de roulement de corps de roulement (31) pour une bague extérieure de palier (32, 32a), et **en ce que** le boîtier (8) contient un régulateur électronique pour un système de freinage de véhicule automobile à régulation antipatinage.

2. Ensemble de pompe ou compresseur du type à refoulement selon la revendication 1, **caractérisé en ce que** le segment d'excentrique radialement extérieur (19) est supporté sur le segment d'excentrique radialement intérieur (18) en interposant des moyens de palier, notamment en interposant un support de palier lisse.

3. Ensemble de pompe ou compresseur du type à refoulement selon la revendication 1, **caractérisé en ce que** le segment d'excentrique radialement extérieur (19) est supporté sur le segment d'excentrique radialement intérieur (18) en interposant des moyens de palier à roulement.

4. Ensemble de pompe ou compresseur du type à refoulement selon la revendication 1, **caractérisé en ce que** le segment d'excentrique radialement extérieur (19) est réalisé sous forme de bague de palier multifonctionnelle et présente une surface de roulement de corps de roulement (33) radialement interne destinée au support sur le segment excentrique radialement intérieur (18).

5. Ensemble de pompe ou compresseur du type à refoulement selon la revendication 1, **caractérisé en ce que** chacun des segments d'excentrique (18, 19) est pourvu d'un moyen de butée qui limite un angle de rotation relatif (β) entre les segments d'excentrique (18, 19).

6. Ensemble de pompe ou compresseur du type à refoulement selon la revendication 1, **caractérisé en ce que** chacun des segments d'excentrique (18, 19), ou au moins un composant connecté de manière solidaire en rotation à celui-ci, présente un logement pour le transfert des forces du moyen élastique (24).

7. Ensemble de pompe ou compresseur du type à refoulement selon la revendication 1, **caractérisé en ce que** les segments d'excentrique (18, 19) sont disposés radialement à l'intérieur de la bague extérieure de palier (32, 32a).

8. Ensemble de pompe ou compresseur du type à refoulement selon la revendication 1, **caractérisé en ce que** le moyen élastique (24) est disposé dans la bague extérieure de palier (32, 32a).

9. Ensemble de pompe ou compresseur du type à refoulement selon la revendication 1, **caractérisé en ce que** la bague extérieure de palier (32, 32a) est réalisée en forme de pot avec un fond fermé (34, 34a).

10. Ensemble de pompe ou compresseur du type à refoulement selon la revendication 1, **caractérisé en ce que** l'arbre d'entraînement (4), pour recevoir un ou plusieurs éléments de construction d'engrenage, comme notamment pour recevoir le moyen élastique (24), est réalisé sous forme creuse, et **en ce que** le moyen élastique (24) traverse au moins en partie l'arbre d'entraînement (4).

11. Ensemble de pompe ou compresseur du type à refoulement selon la revendication 1, **caractérisé en ce que** le moyen élastique (24) est réalisé sous forme de ressort à boudin.

12. Ensemble de pompe ou compresseur du type à refoulement selon la revendication 1, **caractérisé en ce que** le moyen élastique (24) est réalisé sous forme de ressort de torsion.
